Europäisches Patentamt

European Patent Office

Office européen des brevets

(11) Publication number: **0 332 238**
**A2**

## (12) EUROPEAN PATENT APPLICATION

(21) Application number: 89200246.0

(51) Int. Cl.4: **A01B 33/10** , **A01B 23/02**

(22) Date of filing: 03.02.89

(30) Priority: 08.02.88 NL 8800289

(43) Date of publication of application:
13.09.89 Bulletin 89/37

(84) Designated Contracting States:
DE FR GB NL

(71) Applicant: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) A soil cultivating machine.

(57) The invention relates to a soil cultivating machine comprising a frame and at least one soil
working element (39, 52) which is rotatable about an
axis and has at least one end portion (44, 57) that is
detachable from a carrier (10, 47). The detachable
end portion (44, 57) is provided around a detachable
carrier (41, 53) of the soil working element (39, 52).
The detachable end portion (44, 57) can be har-
dened and/or include a wear-resistant coating. The
carrier (41, 53) includes a conical portion (42, 55)
around which the detachable end portion (44, 57) is
fitted. The soil working element (15, 39) can be
arranged on a forged disc-shaped carrier (10) which
constitutes an integral whole with a shaft (7, 8) for
the soil working member (2) and a cup-shaped
screen (29) is arranged above and at least partly
around the carrier (10) for a soil working element
(15, 39).

FIG.5

Xerox Copy Centre

# A SOIL CULTIVATING MACHINE

The invention relates to a soil cultivating machine comprising a frame and at least one soil working element which is rotatable about an axis and has at least one end portion that is detachable from a carrier.

In soil cultivating machines of the above-defined type, the carier is not detachable, so that, when the non-detachable carrier is damaged or evidences wear, a relatively expensive replacement is required.

Using the construction according to the invention, it is possible to achieve that, in case of wear of the carrier of the soil working element, the carrier itself can be detached and replaced, which will have a considerable cost-reducing effect.

A further feature of the invention concerns a soil cultivating machine of the above-defined type, in which the detachable end portion is hardened and/or includes a wear-resistant coating. Using this construction, the operating life of the detachable end can be increased significantly.

A still further feature of the invention concerns a soil cultivating machine of the above-defined type, in which the detachable end portion is arranged around a conical part of the carrier, which enables a reliable connection of the detachable end portion.

A further feature of the invention concerns a soil cultivating machine of the above-defined type, in which a soil working element is attached to a disc-shaped carrier, while a cup-shaped screen is arranged above and at least partly around the said disc-shaped carrier. Using this provision, it is possible to obtain in a cheap and simple manner an efficient protection from damage by stones and the like.

For a better understanding of the present invention and to show how the same may be carried into effect, reference will now be made, by way of example, to some embodiments shown in the accompanying drawings, wherein:

Figure 1 is a plan view of a soil cultivating machine comprising constructions according to the invention;

Figure 2 is, to an enlarged scale, a view taken on the line II-II in Figure 1;

Figure 3 is a view taken in the direction of the arrow III in Figure 2;

Figure 4 is, to an enlarged scale, a view taken on the line IV-IV in Figure 1;

Figure 5 is a view and partly a cross-sectional view of a soil working element mounted on a disc-shaped carrier according to the invention and having a detachable portion;

Figure 6 is a view taken in the direction of the arrow VI in Figure 5, and

Figure 7 shows a second embodiment of a soil working element comprising a detachable end portion according to the invention.

The implement shown in the drawings concerns a soil cultivating machine, in particular one for the preparation of a seed bed.

The machine comprises a box-like frame portion 1 which extends transversely to the direction of operative travel A and wherein in a manner to be described hereinafter there are supported at equal interspaces of preferably 25 cms the upwardly directed, preferable at least substantially vertical, shafts of soil working members 2. The ends of the box-like frame portion 1 are closed by means of plates 3 which extend upwardly and at least substantially parallel to the direction of operative travel A. Near their leading sides, the plates 3 are provided with a pin 4, the arrange ment being such that the longitudinal centre lines of the pins are in alignment. About each of the pins 4 there is arranged freely pivotably an arm 5 which extends rearwardly along the inner side of a plate 3 and by means of an adjusting device 6, in this embodiment designed as a threaded spindle, can be adjusted to and locked in a plurality of positions. Between the free rear ends of the arms 5 there is arranged freely rotatably a roller 6A, which roller, during operation, supports the machine and determines the working depth of the soil working members 2.

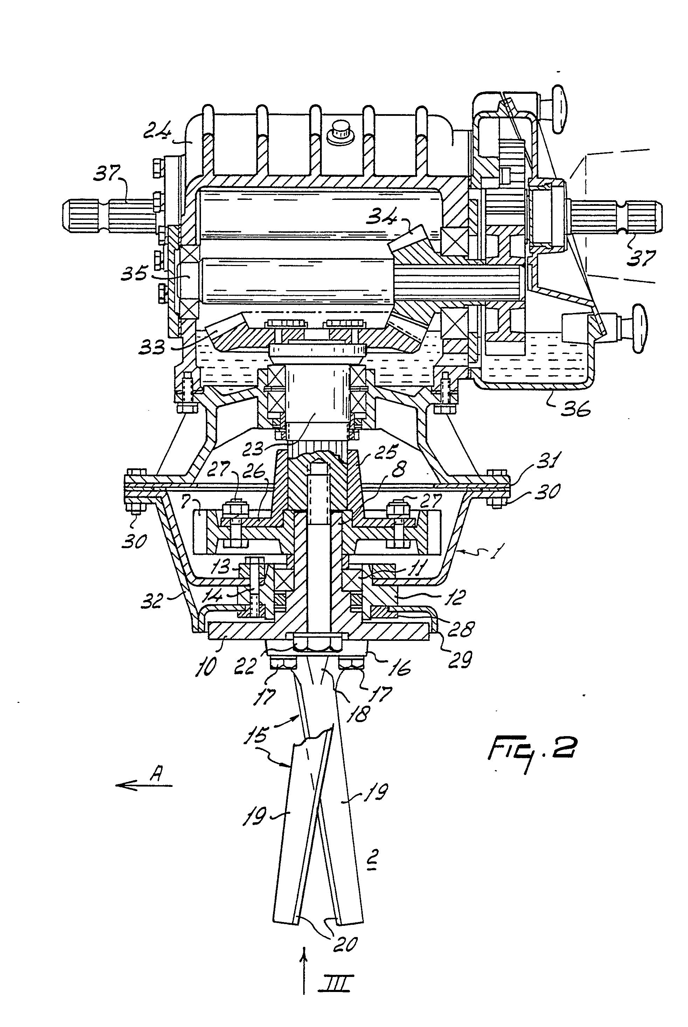

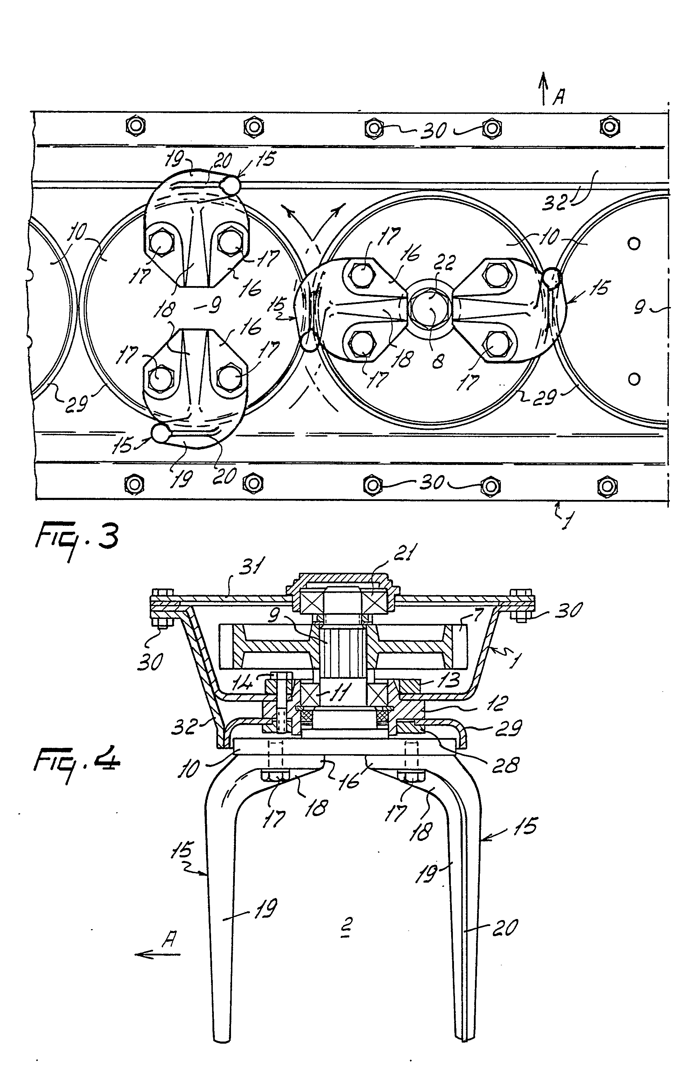

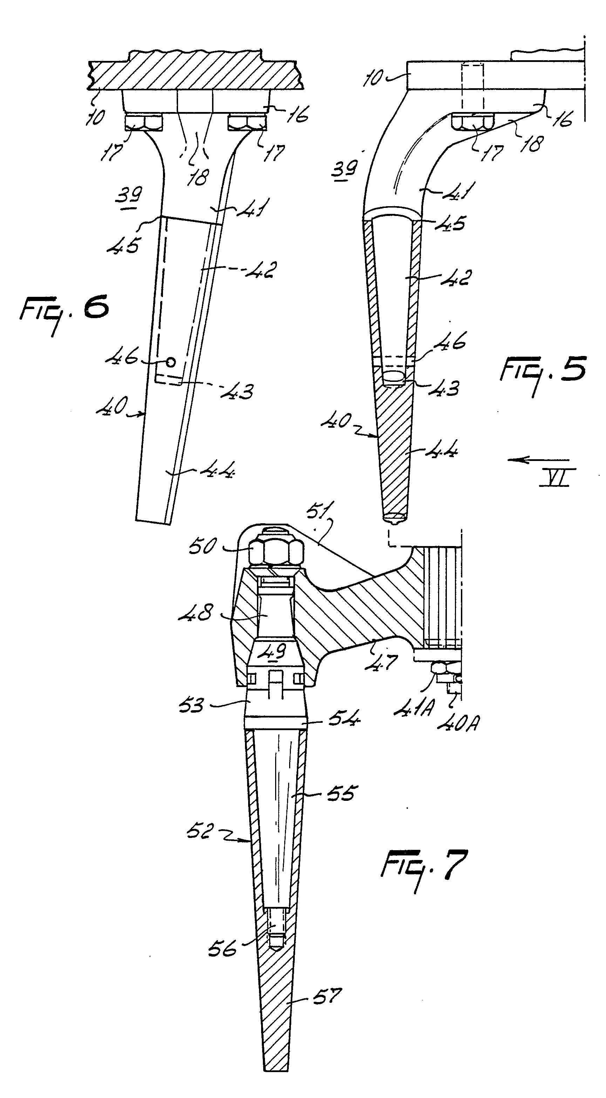

Inside the box-like frame portion 1 there is provided a transmission for the drive of the soil working members 2, which transmission comprises meshing gear wheels 7 and is drivable from the power take-off shaft of a tractor via the shaft 8 of a centrally located soil working member 2. At its inner side, the shaft 8 is provided with a cylindrical recess, whereas each of the further soil working members 2 has a solid shaft 9. Each of the soil working members 2 is provided with a disc-shaped carrier 10 which is produced as an integral whole with the respective shafts 8 and 9 by forging. The shaft 8 and each of the shafts 9 are supported by a bearing 11 accommodated in a bearing housing 12, which housing is mounted in the manner shown in Figures 2 and 4 inside the box-like frame portion 1 by means of bolts 14 and a connecting ring 13. Diametrically opposite each other, to each disc-shaped carrier 10 there are fitted soil working elements in the form of tines 15. Each of the tines 15 includes a connecting portion 16, the flat upper side of which is bolted against the flat lower side of the disc-shaped carrier 10 by means of two bolts 17 (Figures 3 and 4). At their facing sides, the connection portions taper (Figure 3) and include a free end extending at least substantially tangentially relative to the axis of rotation of the soil working member. Taken in the direction of rotation, the bolts are located behind each other, which bolts are screwed into threaded holes provided in the disc-shaped carrier 10 and located on either side of a radial rib 18, whose height increases in the outward direction (Figure 4). As is apparent from Figure 4, the connecting portion 16 merges via a curvature of approximately 90° into a downwardly extending active portion 19. The connecting portion 16 initially extends outwardly from the disc-shaped carrier 10 (Figure 4). The active portion 19 of a tine 15 tapers towards its free end, while the longitudinal centre line thereof encloses an angle of approximately 8° with a vertical symmetry plane (Figure 2), the arrangement being such that the active portion 19 of the tine 15 is trailing relative to the direction of rotation imparted to the soil working members 2 during operation. The active portion 19 has a substantially round cross-section and is provided at the side, which relative to the direction of rotation is the leading side, with a rib 20 extending from the connecting portion 16 to the free end of the tine 15.

The shafts 9 of the soil working members 2 are supported at the upper side of the box-like frame portion 1 by means of bearings 21. The shaft 8, which, as has been stated already in the foregoing, is provided with a cylindrical recess, is connected inside the frame portion 1 by means of a bolt 22 accommodated in the recess to a shaft 23 which projects from the bottom side of a gear box 24 and whose longitudinal centre line is in alignment with that of the cylindrical recess. By means of an end provided with splines, the shaft 23 is arranged in a bushing 25 which is bolted to the upper side of the gear wheel 7 by means of a flange 26 and bolts 27. During assembly, after the disc-shaped carrier 10 with the shaft 8 and the gear wheel 7 have been mounted, the lower end of the outgoing shaft 23 present at the bottom side of the gear box 24 can be arranged in the bushing 25. Thereafter the gear box 24 is fitted to the upper side of the box-like frame portion 1. In this manner the gear box 24 can be applied rapidly and efficiently. By means of rings 28 and the bolts 14, a cup-shaped screen 29 made from pressed plate material is fitted against the lower side of each bearing housing 12, which screen extends via a downwardly curved edge to as far as at least half the height of a disc-shaped carrier 10 of a soil working member 2 and envelops same with some clearance (Figure 2). As is apparent from Figure 3, the cup-shaped screens are adjoining. At the leading side of the box-like frame portion 1 there is fitted a plate 32 by means of bolts 30 which connect a lower part of the frame portion to a cover plate 31. From its connection, the plate 32 extends downwardly along the front side of the frame portion 1, which front side extends obliquely downwardly and rearwardly (Figure 2). By means of its straightly downwardly folded lower end, the plate 32 bears against the leading side of the cup-shaped screens 29 (Figures 3 and 4). The plate 32 extends along the entire length of the frame portion 1. Inside the gear box 24, the shaft 23 projecting from the bottom side thereof is in driving connection with a shaft 35 via a bevel gear wheel transmission 33, 34. The shaft 35 extends in the direction of operative travel A and via a speed variator 36 present at the rear side of the gear box 24 is in driving connection with a shaft 37 which is located thereabove and is shifted relative thereto to over the centre of the box-like frame portion 1. The shaft 37 projects at both the front and the rear side beyond the gear box 24 and the speed variator 36, respectively. The end of the shaft 37 projecting beyond the gear box 24 at the front side can be connected to the power take-off shaft of a tractor by means of an intermediate shaft 38. At the leading side of the box-like frame portion 1 there is arranged a trestle 39A comprising a three-point connection for coupling the machine to the three-point lifting hitch of a tractor.

Figures 5 and 6 show an embodiment of a soil working element in the form of a tine 39, wherein component parts corresponding to those of the preceding embodiment have been denoted by the same reference numerals.

The active portion 40 of the tine 39 comprises a carrier or carrying portion 41 located near the upper side, which carrier or carrying portion extends from the connecting portion 16 through at least substantially one quarter of the length of the active portion before merging into a constricted portion 42 which tapers towards its free end and, preferably, is of a circular cross-section. The portion 42, which extends to approximately half of the remaining portion of the active portion 40, fits in a corresponding recess 43 provided in a detachable end portion 44 of the active portion 40. The detachable end portion 44 has a length which exceeds half that of the active portion 40 and, as is apparent from Figures 5 and 6, is pushed over the tapering portion 42 until its upper side bears against a shoulder 45 formed at the lower side of the carrying portion 41. The tapering portion 42 of the carrying portion 41 and the detachable end portion 44 are fixed relative to each other by means of a roll pin 46. The roll pin 46 is passed through an aperture provided near the lower side of the tapering portion 42. Using the provision shown in Figures 5 and 6, in the event of wear or damage it is possible to remove the detachable end portion 44 preferably consisting of a hard, wear-resistant substance and to replace same by a new detachable end portion, without it being necessary to remove the entire tine 39.

Figure 7 shows a second embodiment wherein in the box-like frame portion 1 shafts 40A are supported by means of bearings located near the lower and upper sides. Inside the frame portion 1, the shafts 40A are provided with gear wheels 11 and can be driven in a known per se manner from the power take-off shaft of a tractor via the gear box 24 and the speed variator 36. On each of the shafts 40A there is mounted a carrier 47 by means of splines and a nut 41A adapted to cooperate with thread on the lower end of the shafts 40A. At its ends, the carrier 47 is fitted with busing-shaped portions accommodating the connecting portions 48 of the soil working elements designed as tines 49. The connecting portions 48 are fixed by means of nuts 50 which co-operate with thread on the upper side and are protected from damage by stones and the like by screen plates 51 which, taken in the direction of rotation, are located in front of the nuts. The connecting portion 48 merges into an active portion 52 which comprises a carrier or carrying portion 53 extending through a small distance and merges via a shoulder 54 into a conical portion 55 having a threaded cylindrical portion 56 and, preferably, a round cross-section. Around the conical portion 55 there is arranged a detachable end portion 57 by means of a correspondingly designed recess which at its lower side is provided with thread adapted to co-operate with that on the cylindrical lower portion 56 of the conical portion 55. Also here, like in the preceding embodiment , in the event of wear and/or damage it is possible to replace the detachable end portion 57 of the tine 49, which portion is made of a hard and wear-resistant material.

The machine as described in the foregoing operates as follows.

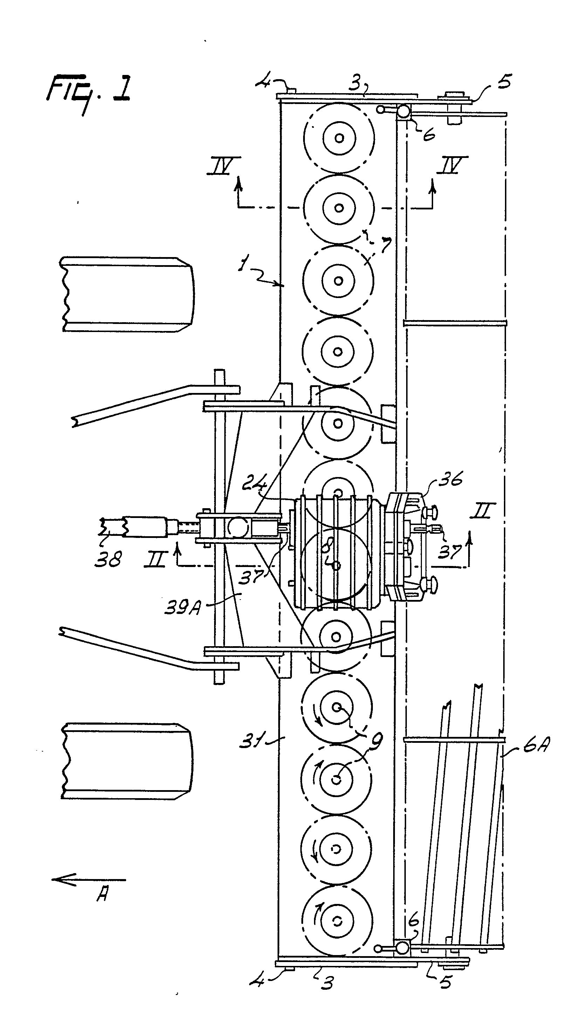

During operation, the implement is coupled by means of the trestle 39A to the three-point lifting hitch of a tractor and each of the soil working members 2 can be driven in a direction indicated by arrows in Figure 1 from the power take-off shaft via the intermediate shaft 38 and the transmission located in the gear box 24, the speed variator 36 and the box-like frame portion 1. Adjacent soil working members thereby cultivate at least adjoining strips of soil by means of their respective tines 15, 39 and 49. As has been stated already in the foregoing, the working depth of the soil working members 2 can be set with the aid of the roller 6A. By means of the plate 32 arranged at the leading side of the frame portion 1, which plate by means of its lower end bears against the cup-shaped screens 29 located at the lower sides of the bearing housings 12 for the soil working members 2, there is obtained in a simple and cheap manner an efficient protection against stones, thereby preventing stones from getting stuck between the bottom side of the frame portion 1 and the respective disc-shaped carriers 10 and/or between the disc-shaped carriers of the soil working members 2. The dual active portions 40 and 52, respectively, of the respective tines 39 and 49, i.e. the carrying portions 41 and 53, respectively, and the respective detachable end portions 40 and 57, render it possible to significantly prolong the operating life of a tine . In addition, the tine can be provided with a new detachable end portion in a simple manner, without the necessity of removing the entire tine from the carrier. With the aid of the rib located at the lower side there can be achieved an effective stiffening of the connecting portion 16 and, in addition, a certain protection for the connecting bolts 17.

The invention is not limited to the features described in the foregoing but also relates to all the details of the drawings, whether they have been described or not.

## Claims

1. A soil cultivating machine comprising a frame and at least one soil working element (39, 52) which is rotatable about an axis and has at least one end portion (44, 57) that is detachable from a carrier (10, 47), characterized in that the detachable end portion (44, 57) is provided around a detachable carrier (41, 53) of the soil working element (39, 52).

2. A soil cultivating machine as claimed in claim 1, characterized in that the detachable end portion (44, 57) is hardened and/or includes a wear-resistant coating.

3. A soil cultivating machine as claimed in claim 1 or 2, characterized in that the detachable end portion (57) is provided with a threaded conical recess.

4. A soil cultivating machine as claimed in 1 or 2, characterized in that the detachable end portion (44) is provided near its midway point with a fixing pin (46).

5. A soil cultivating machine as claimed in any one of the preceding claims, characterized in that a soil working element (15, 39) is arranged on a forged disc-shaped carrier (10) which constitutes an integral whole with a shaft (9) for the soil working member (2), and that the soil working element (15,39) is fitted by means of a bolt (17) which is screwed into a threaded hole in the disc.

6. A soil cultivating machine as claimed in any one of the preceding claims, characterized in that the drive for the soil working members (2) comprises meshing gear wheels (7), and that one gear wheel at the upper side is provided with a bushing (25) having splines for accommodating an outgoing shaft (23) from a gear box (24) of a central drive.

7. A soil cultivating machine as claimed in any one of the preceding claims, characterized in that a cup-shaped screen (29) is arranged above and at least partly around a carrier (10) for a soil working element (15, 39).

8. A soil cultivating machine as claimed in any one of the preceding claims, characterized in that at the leading side of a frame portion (1) wherein the soil working members (2) are supported there is fitted a downwardly extending plate (32) which bears against the frame portion wall.

9. A soil cultivating machine as claimed in any one of claims 1 to 4, characterized in that the detachable end portion (44, 57) extends through at least half of the length of the active portion (40, 52).

10. A soil cultivating machine as claimed in claim 9 and claim 4, characterized in that the carrier (41) includes a conical portion (42), around which the detachable end portion (44) is fitted, and that a fixing pin (46) is provided near the end of the conical portion (42).

11. A soil cultivating machine as claimed in claim 9 and claim 3, characterized in that the end of the conical portion (55) includes a threaded portion (56) adapted to cooperate with thread at the bottom side of a corresponding recess in the detachable end portion (57).

12. A soil cultivating machine as claimed in any one of claims 7 to 11, characterized in that the cup-shaped screens (29) extend to at least half of the height of a discshaped carrier (10).

13. A soil cultivating machine as claimed in any one of claims 7 to 12, characterized in that the cup-shaped screens (29) for the carriers (10) are contiguous to each other at adjacently arranged soil working members (2).

14. A soil cultivating machine as claimed in claim 7 or in any one of claims 9 to 13 and claim 8, characterized in that the plate (32) fitted at the leading side of the frame portion (1) extends at its bottom side at least substantially vertically downwardly and bears against the leading side of the cup-shaped screens (29).

EP 0 332 238 A2

FIG. 1

FIG. 2

FIG. 3

FIG. 4

FIG. 6

FIG. 5

FIG. 7